# EUROPEAN PATENT APPLICATION

(11) **EP 1 954 079 A1**
(43) Date of publication of application: **06.08.2008**
(21) Application number: 07002132.4
(22) Date of filing: 31.01.2007
(51) Int. Cl.: H04Q 7/34

(54) **Trace control in cellular mobile systems with a flat architecture**

(71) Applicant: Nokia Siemens Networks GmbH & Co. KG, 81541 München (DE)
(72) Inventor: Troch, Eddy, 2547 Lint (BE); Waldhauser, Richard, 81249 München (DE)

(57) **Abstract**

A device (100) comprises a wireless connection provision unit (101) for providing wireless connection to a user equipment in a cellular mobile system, a receiving unit (102) for receiving control data for starting a trace function of the user equipment, a processing unit (103) for processing the trace function based on the control data, and a transmitting unit (104) for forwarding the control data and trace data to a target device in case of a handover of the user equipment to the target device.

## Description

### FIELD OF THE INVENTION

The present invention relates to controlling a trace function in cellular mobile systems with flat architecture.

### BACKGROUND OF THE INVENTION

Flat network architectures are one of the main characteristics of cellular mobile networks beyond 3G (Third Generation) networks. For example, an evolved UTRAN (Universal Terrestrial Radio Access Network) will consist of an evolved Node B (eNode B) only instead of a Node B and a Radio Network Controller (RNC).

Today's configuration activities on behave of moving terminals are quite infrequent events because the function is located in the RNC, which normally is responsible for a huge amount of Node Bs, i.e. covers a big geographical area. For example, reconfigurations of trace functionality because of terminal movements are required only when a UE (User Equipment) performs a handover to a Node B that is not under control of the same RNC.

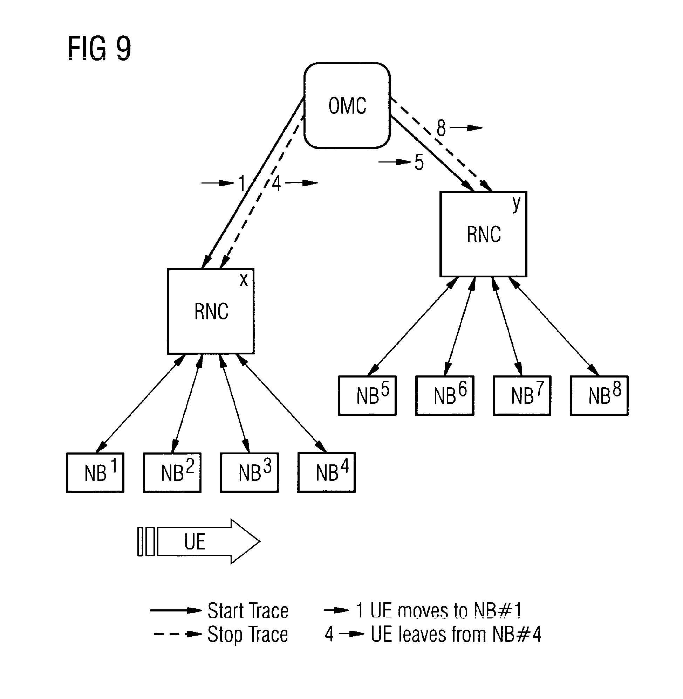

Fig. 9 shows a schematic diagram illustrating administrative actions performed by an OMC (Operations and Maintenance Centre) when a UE moves from a Node B NB4 which is controlled by RNCx to Node B NB5 which is controlled by RNCy.

The trace function is administered (e.g. start/stop tracing) by the OMC. Also the OMC performs post-processing on trace data received from an RNC. The RNC performs the actual work.

It collects the requested trace data and may even perform some pre-processing, e.g. combining the data from different sources within the RNC or from different Node Bs, arranging and/or sorting the data, and finally the data may be compressed for reporting to the OMC. The reports may be sent autonomously according to some criteria that have been given by the OMC or it may be sent on request.

As shown in Fig. 9, Node Bs NB1, NB2, NB3 and NB4 belong to the realm of RNCx, and Node Bs NB5, NB6, NB7 and NB8 belong to the realm of RNCy. If the traced terminal (i.e. the UE) hands over to a Node B that belongs to the realm of another RNC then the OMC must terminate the trace function at the old RNC and start the trace at the new RNC. Alternatively, the function may be started at many RNCs simultaneously but reports are received only from the RNC which is currently responsible for the UE.

As shown in Fig. 9, when the UE moves from NB4 which is controlled by RNCx to NB5 which is controlled by RNCy, the OMC stops the trace function in RNCx (4→) which was started when the UE was moving to NB1 (→1). Moreover, the OMC starts a trace function in RNCy (→5). If the UE is going to leave from NB8, the OMC will stop the trace function in RNCy (8→).

In beyond 3G systems, the OMC would have to reconfigure the trace functionality every time the UE hands over to another eNode B. This can occur very frequently for quickly moving UEs and increases the processing load at the OMC, especially when the trace function is active for many users simultaneously.

### SUMMARY OF THE INVENTION

The invention provides trace functionality in cellular mobile systems with flat architecture, which enables saving of network resources and reduction of network load.

The invention is achieved by the devices and methods as defined in the appended claims.

The invention may also be implemented in a computer program product.

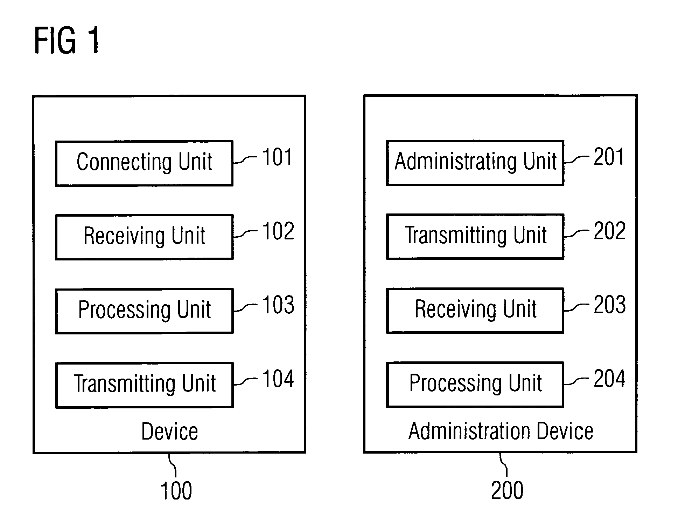

According to an aspect of the invention, as shown in Fig. 1, a device 100 such as an evolved Node B, comprises a connecting unit 101, a receiving unit 102, a processing unit 103 and a transmitting unit 104. The connecting unit 101 provides wireless connection to a user equipment in a cellular mobile system. The receiving unit 102 receives control data for starting a trace function of the user equipment, and the processing unit 103 processes the trace function based on the control data. In case of a handover of the user equipment to a target device, the transmitting unit 104 forwards the control data to the target device such as another evolved Node B.

The processing unit 103 terminates the trace function after the handover to the target device.

The transmitting unit 104 may include the control data in a message used for performing the handover to the target device or in a separate message to the target device, and may also transmit trace data. The trace data may be transmitted to at least one of an administration device 200 administrating the trace function, such as an OMC, the target device and an anchor device (such as another evolved Node B) from which the user equipment was handed over.

The control data may be received from at least one of the administration device 200 and a source device or anchor device (such as another evolved Node B) from which the user equipment has been handed over to the connecting unit 101.

In turn, trace data may be received by the receiving unit 102, and the processing unit 103 may combine the received trace data with own trace data produced in performing the trace function.

The trace data may be received from the source device, or may be received from a serving device (such as another evolved Node B) to which the user equipment was handed over and which is currently serving the user equipment e.g. in case the device 100 acts as the anchor device.

In case the receiving unit 102 receives a stop command for stopping the trace function, the processing unit 103 terminates the trace function based on the stop command.

The stop command may be received from the administration device 200 and/or the anchor device from which the user equipment was handed over.

When the stop command is received by the receiving unit 102, the transmitting unit 104 may transmit trace data to a stop command sending device from which the stop command has been received, i.e. the administration device 200 and/or the anchor device. When the device 100 acts as an anchor device, the transmitting unit 104 may forward the stop command to the serving device.

The receiving unit 102 may also receive a request for trace data e.g. from the administration device. When the device 100 acts as an anchor device, the transmitting unit 104 may forward the request to the serving device.

In response to the request for trace data, the transmitting unit 104 may transmit the trace data to a request sending device from which the request has been received, i.e. the administration device 200 and/or the anchor device.

Thus, similarly to the STOP command, the anchor device forwards the request to the serving device such that the anchor device can collect the current trace data before it is reported to the administration device.

The trace data may comprise trace result data generated by the processing unit 103 as a result of the processing of the trace function. Alternatively or in addition, the transmitting unit 104 may transmit the trace data to the administration device 200 such that the target device of a pending handover is indicated to the administration device 200. Alternatively or in addition, when the control data is received by the receiving unit 102, the transmitting unit 104 may transmit an identification of the device 100 to the administration device 200.

As shown in Fig. 1, the administration device 200 comprises an administrating unit 201 for administrating a trace function, a transmitting unit 202 for transmitting control data for starting the trace function to a source device, such as an evolved Node B, e.g. the device 100, currently providing wireless connection to a user equipment in a cellular mobile system, a receiving unit 203 for receiving trace data generated based on the control data, and a processing unit 204 for processing the trace data. The processing unit 204 determines from the trace data a target device (such as another evolved Node B) to which the user equipment was handed over. The transmitting unit 202 may transmit a stop command for stopping the trace function and/or a request for trace data to the target device. The processing unit 204 may combine the trace data received by the receiving unit 203 from the source device and target devices to which the user equipment was handed over.

According to an alternative embodiment, the transmitting unit 202 may transmit the stop command for stopping the trace function and/or the request for trace data to the source device.

It is to be noted that the devices shown in Fig. 1 may have further functionality for working e.g. as eNode B and OMC. Here the functions of the devices relevant for understanding the principles of the invention are described using functional blocks as shown in Fig. 1. The arrangement of the functional blocks of the devices is not construed to limit the invention, and the functions may be performed by one block or further split into sub-blocks.

With the present invention, high load at the OMC can be prevented. The control data of the trace function is directly forwarded from the source to the target eNode Bs along the terminals (user equipments) route through the network. This obsoletes an active involvement of the OMC to administer the trace function at both the source and the target eNode B every time when the terminal hands over to a new eNode B. Moreover, by exchanging trace result data peer-to-peer between eNodeBs, it is avoided that the OMC must correlate trace data reports received from many eNodeBs.

### BRIEF DESCRIPTION OF THE DRAWINGS

Fig. 1 shows a schematic block diagram illustrating devices according to an implementation example of the invention.
Fig. 2 shows a schematic diagram illustrating a trace control mechanism according to a first embodiment of the invention.
Fig. 3 shows a signaling diagram illustrating communication between eNode Bs and an OMC according to the first embodiment.
Fig. 4 shows a signaling diagram illustrating communication between eNode Bs and an OMC according to the first embodiment.
Fig. 5 shows a signaling diagram illustrating communication between eNode Bs and an OMC according to the first embodiment.
Fig. 6 shows a schematic diagram illustrating a trace control mechanism according to a second embodiment of the invention.
Fig. 7 shows a signaling diagram illustrating communication between eNode Bs and an OMC according to the second embodiment.
Fig. 8 shows a schematic diagram illustrating a trace control mechanism.
Fig. 9 shows a schematic diagram illustrating a trace control mechanism according to the prior art.

### DESCRIPTION OF THE PREFERRED EMBODIMENTS

In cellular mobile systems with flat architecture the functions that were formerly located at an RNC will become obsolete, or have to be located at an eNode B, or at a node that is hierarchically located above the eNode B, i.e. will belong to the evolved core network, e.g. an Access Gateway. According to the present invention it is assumed that trace functionality will be located at the eNode B.

As described above, in the evolved UTRAN the RNC will not exist and it is assumed that corresponding trace functionality will be located at the evolved Node B.

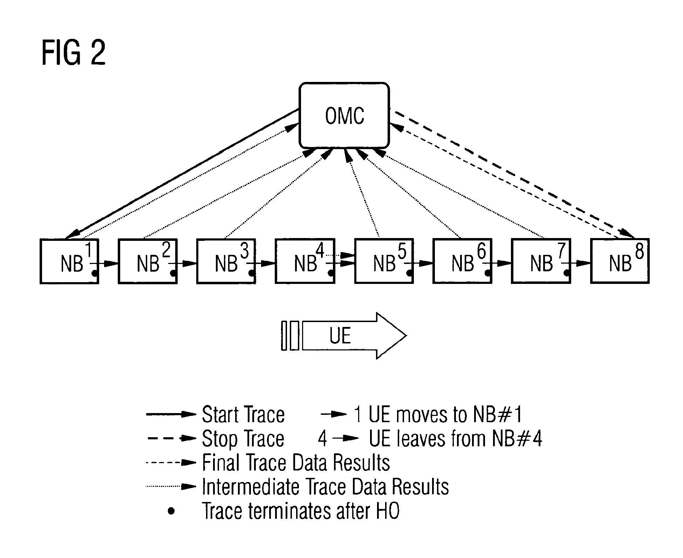

As shown in Fig. 2 illustrating a first embodiment of the invention, an OMC (Operations and Maintenance Centre) sends an initial start message for tracing a terminal UE to an eNode B NB1 which is currently responsible to serve the terminal UE. This message contains all necessary data that is required by the eNode B NB1 to control the trace function.

This control data for the trace functionality may for example contain information about what terminal to trace, what data exactly has to be traced and how and when it should be provided to the OMC.

When the terminal UE hands over to another eNode B, e.g. NB2, then the trace control data, which is needed to start the trace is sent to the new target eNode B NB2. A corresponding trigger is needed by the trace function in the source eNode B NB1, which may be provided by the handover control function of the eNode B, e.g. when it is clear to which target eNode B the handover will be done or after successfully performed handover.

The transfer of the trace control data may be integrated in the handover messages or may be handled by a separate message exchange. The newly started trace function at the target eNode B NB2 may send a message to the OMC in order to inform the OMC that the responsibility for the trace function has been taken over by this eNode B.

Alternatively, the terminating trace function at the source eNode B NB1 may inform the OMC about the eNode B which is now responsible for the trace function. This may be combined with the intermediate trace result data reporting to the OMC, for example. Thus, trace data reports may be sent by a source eNodeB to the OMC each time a handover has been completed. This situation is illustrated in Fig. 2 for the route from NB1 to NB8 of the UE, except for the handover from NB4 to NB5, which depicts a modification of the first embodiment.

It is to be noted that, when tracing is stopped due to handover, always an intermediate trace result is provided. Final reports are only emitted when tracing is stopped by the OMC or when the call is terminated; in these cases there is no new eNodeB to be reported.

According to a modification of the first embodiment, the source eNode B (NB4 according to Fig. 2) may also transfer trace result data to the target eNode B (NB5 according to Fig. 2) instead to the OMC, e.g. when the amount of trace result data is very small and thus is not worth the effort of transferring it to the OMC and when a direct transfer of the trace result data between the eNode Bs is not excluded by the OMC in the initial start message for tracing.

In this modification, eventually the trace data, which actually was generated by the source eNode B (the eNode B before the handover), is reported to the OMC from the target eNodeB (the serving eNode B after the handover), or from the serving eNode B when tracing is stopped, or when there is some need for it (e.g. at intermediate times to limit the amount of data in one report).

It can be seen that administrative actions are performed by the OMC only when the trace function is initially started or finally terminated for an UE. In the meantime the trace function is "forwarded" along the route of the UE. This situation is illustrated in Fig. 2 for the consecutive handovers from NB1 to NB8.

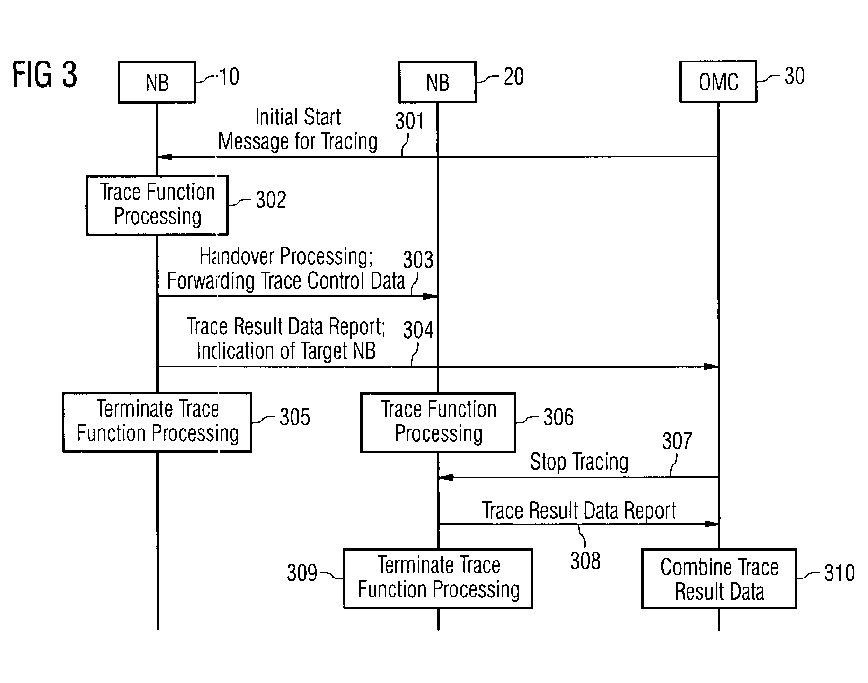

Fig. 3 shows a signaling diagram illustrating trace control according to the first embodiment in case the source eNode B sends trace data reports including an indication of a new eNode B to the OMC each time a handover has been completed. This corresponds to the situation illustrated in Fig. 2 for the route of the UE from NB1 to NB8 of the UE, except for the handover from NB4 to NB5.

As shown in Fig. 3, in step 301 an OMC 30 sends an initial start message for tracing to an eNode B NB 10 which is currently serving a terminal for which a trace function is to be performed. Thereupon, the NB 10 starts trace function processing in step 302 based on trace control data included in the initial start message for tracing. When the NB 10 hands over to another eNode B NB20, the trace control data is forwarded to the NB 20 in step 303 e.g. in connection with a handover message sent from the NB 10 to the NB 20.

Moreover, in step 304 the NB 10 sends a trace data report to the OMC 30 and informs the OMC 30 about the NB 20 which is now responsible for the trace function.

In step 305 the NB 10 terminates trace function processing in reaction to the handover, and in step 306 the NB 20 starts trace function processing based on the trace control data received from the NB 10.

In case the OMC 30 wishes to stop tracing, it sends a stop tracing command to the NB 20, which has been indicated to the OMC 30 as currently serving the terminal (step 307). Thereupon, the NB 20 sends a trace result data report to the OMC 30 in step 308, and terminates the trace function processing in step 309. The OMC 30 combines the trace result data received from NB 10 and NB 20 in step 310.

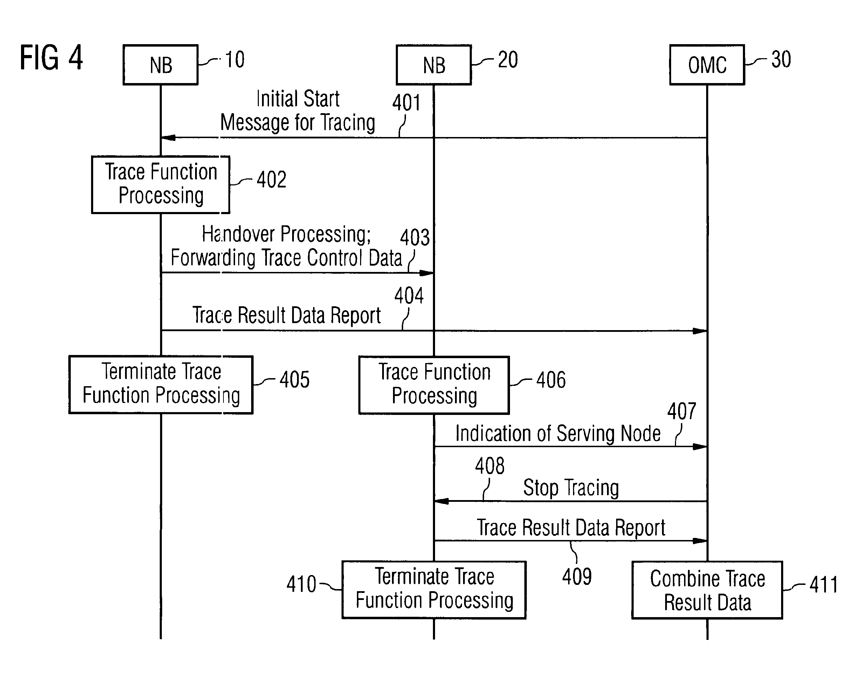

Fig. 4 shows a signaling diagram illustrating trace control according to the first embodiment in case the source eNode B sends trace data reports to the OMC each time a handover has been completed and the target eNode B sends a message to the OMC in order to inform the OMC that the responsibility for the trace function has been taken over by this new eNode B.

Steps 401 to 403, 405, 406 and 408 to 411 correspond to steps 301 to 303, 305, 306 and 307 to 310, respectively. Thus, in the following only steps 404 and 407 different to the data flow shown in Fig. 3 will be described.

In step 404, the NB 10 sends a trace data report to the OMC 30 without an indication of the new eNode B NB 20. Therefore, in step 407, the NB 20 sends a message to the OMC 30 indicating its responsibility of the trace function to the OMC 30.

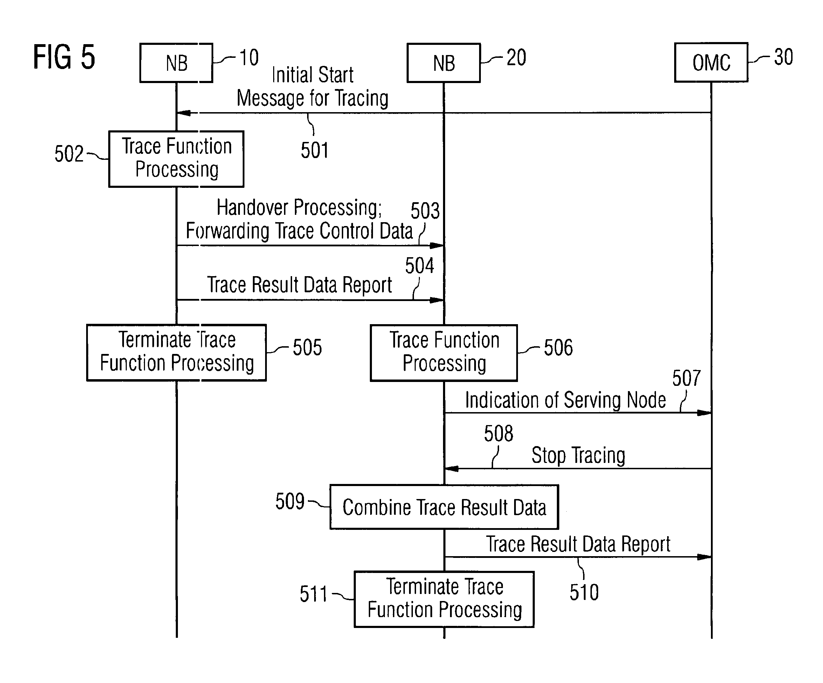

Fig. 5 shows a signaling diagram illustrating trace control according to the modification of the first embodiment, corresponding to the situation illustrated in Fig. 2 for the handover of the UE from NB4 to NB5.

As shown in Fig. 5, in step 501 the OMC 30 sends an initial start message for tracing to the eNode B NB 10 which is currently serving the terminal for which a trace function is to be performed. Thereupon, the NB 10 starts trace function processing in step 502 based on trace control data included in the initial start message for tracing. When the NB 10 hands over to another eNode B NB20, the trace control data is forwarded to the NB 20 in step 503 e.g. in connection with a handover message sent from the NB 10 to the NB 20.

Moreover, in step 504 the NB 10 sends a trace data report to the NB 20.

In step 505 the NB 10 terminates trace function processing in reaction to the handover, and in step 506 the NB 20 starts trace function processing based on the trace control data received from the NB 10.

In step 507 the NB 20 sends a message to the OMC 30 indicating its responsibility of the trace function to the OMC 30.

In case the OMC 30 wishes to stop tracing, it sends a stop tracing command to the NB 20, which has been indicated to the OMC 30 as currently serving the terminal (step 508).

Thereupon, the NB 20 combines the trace result data received from the NB 10 with its own trace result data in step 509, and sends the combined trace result data report to the OMC 30 in step 510, and terminates the trace function processing in step 511.

In the following a second embodiment of the invention will be described.

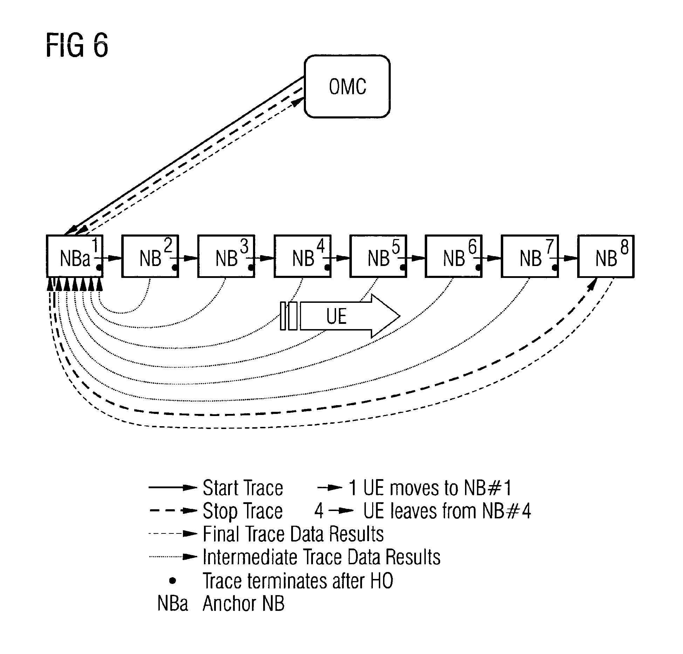

According to the second embodiment of the invention shown in Fig. 6, the first eNodeB (NBa1) remains responsible for the communication with the OMC during a call (i.e. acts as a kind of anchor for trace collection purposes). After each handover between the eNode Bs NBa1, NB2, NB3, NB4, NB5, NB6, NB7 and NB8, the source eNodeB NB2-NB8 reports its collected trace result data to the anchor eNodeB NBa1. When the call is released the trace result data collected at the current eNodeB is also reported to the anchor eNodeB NBa1.

The anchor eNodeB NBa1 then assembles all trace result records related to that call together in a single report and sends this report to the OMC. With this solution, it is not needed to inform the OMC about every handover. Instead, the handovers are reported to the anchor eNodeB. The OMC can stop the tracing by sending a command to the anchor eNodeB, which forwards the command to the serving eNodeB (NB8 according to Fig. 6). At all times the OMC may also request a trace status report from the anchor eNodeB.

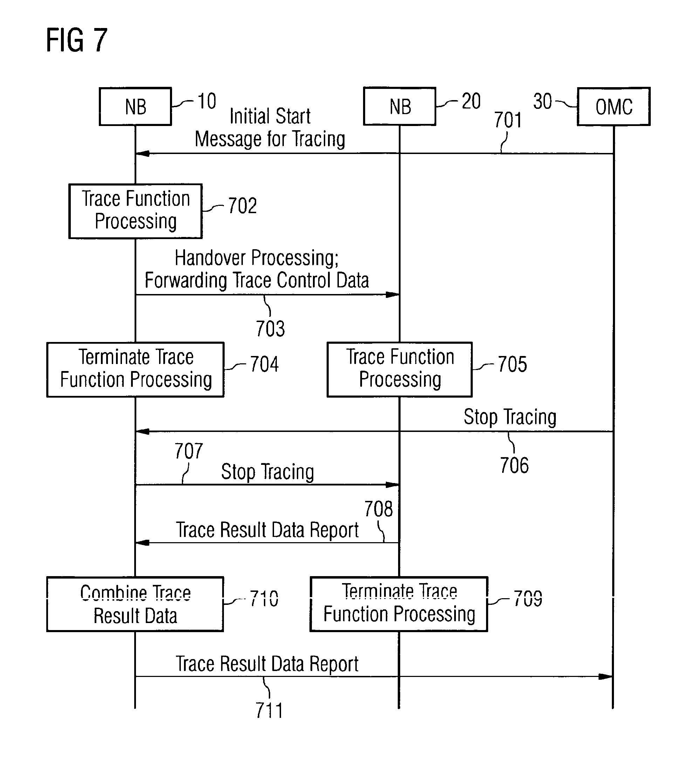

Fig. 7 shows a signaling diagram illustrating trace control according to the second embodiment.

As shown in Fig. 7, in step 701 an OMC 30 sends an initial start message for tracing to an eNode B NB 10 which is currently serving a terminal for which a trace function is to be performed. Thereupon, the NB 10 starts trace function processing in step 702 based on trace control data included in the initial start message for tracing. When the NB 10 hands over to another eNode B NB20, the trace control data is forwarded to the NB 20 in step 703 e.g. in connection with a handover message sent from the NB 10 to the NB 20.

In step 704 the NB 10 terminates trace function processing in reaction to the handover, and in step 705 the NB 20 starts trace function processing based on the trace control data received from the NB 10.

The first eNode B NB 10 remains responsible for the communication with the OMC 30 during the whole call as a kind of anchor device.

In case the OMC 30 wishes to stop tracing, it sends a stop tracing command to the NB 10 in step 706. The NB 10 forwards the stop tracing command to the NB 20 in step 707, whereupon the NB 20 sends a trace result data report to the NB 10 in step 708 and terminates trace function processing in step 709.

In step 710 the NB 10 combines the trace result data received from the NB 20 with its own trace result data in step, and sends the combined trace result data report to the OMC 30 in step 711.

According to the present invention, the control data of the trace function is directly forwarded from the source to the target eNode Bs along the terminals route through the network. This obsoletes an active involvement of the OMC to administer the trace function at both the source and the target eNode B every time when the terminal hands over to a new eNode B. This can occur very frequently, e.g. when the user is moving very quickly, or when traces of many users must be traced in order to get sufficient indices to solve a problem.

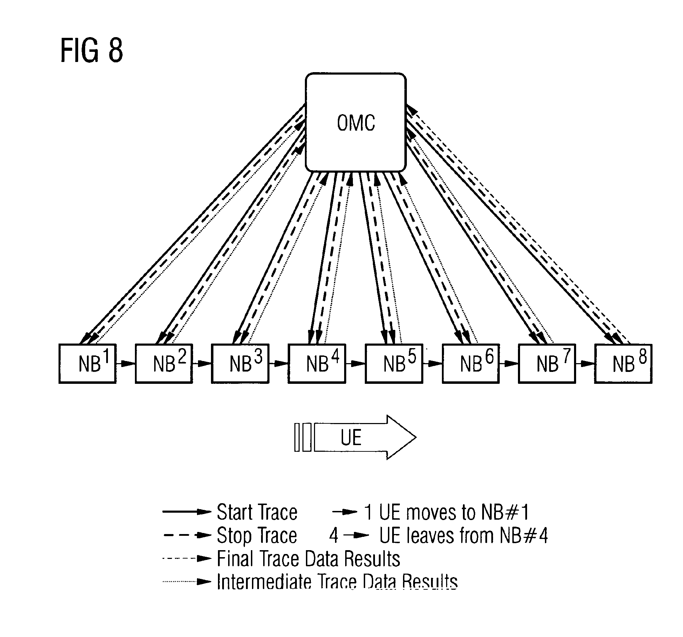

Fig. 8 illustrates trace control in which the OMC is actively involved to administer the trace function at both the source and the target eNode B every time when the terminal hands over to a new eNode B. As can be seen from Fig. 8, the OMC has to send start trace and stop trace messages to each eNode B NB1 to NB8 to which the UE hands over during a call. Moreover, the OMC receives trace data results from each of the eNode Bs. The trace function via OMC leads to a high processing load at the OMC.

This can be prevented by the present invention since the trace function autonomously follows the route of the terminal and therefore relieves the OMC from administrative tasks as described above.

Moreover, according to an embodiment of the invention, by exchanging trace result data peer-to-peer between eNode Bs, it is avoided that the OMC must correlate trace data reports received from many eNode Bs.

For the purpose of the present invention described above, it should be noted that
- method steps likely to be implemented as software code portions and being run using a processor at one of the devices are software code independent and can be specified using any known or future developed programming language;
- method steps and/or devices likely to be implemented as hardware components at one of the devices are hardware independent and can be implemented using any known or future developed hardware technology or any hybrids of these, such as MOS, CMOS, BiCMOS, ECL, TTL, etc, using for example ASIC components or DSP components, as an example;
- generally, any method step is suitable to be implemented as software or by hardware without changing the idea of the present invention;
- devices can be implemented as individual devices, but this does not exclude that they are implemented in a distributed fashion throughout the system, as long as the functionality of the device is preserved.

It is to be understood that the above description of the embodiments is illustrative of the invention and is not to be construed as limiting the invention. Various modifications and applications may occur to those skilled in the art without departing from the scope of the invention as defined by the appended claims.

## Claims

1. A device comprising:
a wireless connection provision unit for providing wireless connection to a user equipment in a cellular mobile system;
a receiving unit for receiving control data for starting a trace function of the user equipment;
a processing unit for processing the trace function based on the control data; and
a transmitting unit for forwarding the control data to a target device in case of a handover of the user equipment to the target device.

2. The device of claim 1, wherein the processing unit is configured to terminate the trace function after the handover to the target device.

3. The device of claim 1 or 2, wherein the transmitting unit is configured to include the control data in a message used for performing the handover to the target device or in a separate message to the target device.

4. The device of any one of claims 1 to 3, wherein the transmitting unit is configured to transmit trace data.

5. The device of claim 4, wherein the transmitting unit is configured to transmit the trace data to an administration device administrating the trace function.

6. The device of claim 4 or 5, wherein the transmitting unit is configured to transmit the trace data to the target device.

7. The device of any one of claims 4 to 6, wherein the transmitting unit is configured to transmit the trace data to an anchor device from which the user equipment was handed over.

8. The device of any one of claims 1 to 7, wherein the receiving unit is configured to receive the control data from an administration device administrating the trace function.

9. The device of any one of claims 1 to 8, wherein the receiving unit is configured to receive the control data from a source device from which the user equipment has been handed over to the wireless connection provision unit.

10. The device of any one of claims 1 to 9, wherein the receiving unit is configured to receive trace data, and the processing unit is configured to combine the received trace data with own trace data.

11. The device of claim 10, wherein the receiving unit is configured to receive the trace data from a source device from which the user equipment has been handed over.

12. The device of claim 10, wherein the receiving unit is configured to receive the trace data from a serving device to which the user equipment was handed over and which is currently serving the user equipment.

13. The device of any one of claims 1 to 12, wherein the receiving unit is configured to receive a stop command for stopping the trace function, and the processing unit is configured to terminate the trace function based on the stop command.

14. The device of claim 13, wherein the transmitting unit is configured to forward the stop command to a serving device to which the user equipment was handed over and which is currently serving the user equipment.

15. The device of claim 13 or 14, wherein the receiving unit is configured to receive the stop command from an administration device administrating the trace function.

16. The device of claim 13, wherein the receiving unit is configured to receive the stop command from an anchor device from which the user equipment was handed over.

17. The device of any one of claims 13 to 16, wherein, when the stop command is received by the receiving unit, the transmitting unit is configured to transmit trace data to a stop command sending device from which the stop command has been received.

18. The device of any one of claims 1 to 17, wherein the receiving unit is configured to receive a request for trace data.

19. The device of claim 18, wherein the receiving unit is configured to receive the request for trace data from an administration device administrating the trace function, and the transmitting unit is configured to forward the request to a serving device to which the user equipment was handed over and which is currently serving the user equipment.

20. The device of claim 18, wherein, when the request for trace data is received by the receiving unit, the transmitting unit is configured to transmit the trace data to a request sending device from which the request has been received.

21. The device of any one of claims 4, 17 or 20, wherein the trace data comprises trace result data generated by the processing unit as a result of the processing of the trace function.

22. The device of claim 5, wherein the transmitting unit is configured to transmit the trace data to the administration device such that the target device is indicated to the administration device.

23. The device of any one of claims 1 to 22, wherein, when the control data is received by the receiving unit, the transmitting unit is configured to transmit an identification of the device to an administration unit administrating the trace function.

24. An administration device comprising:
an administrating unit for administrating a trace function;
a transmitting unit for transmitting control data for starting the trace function to a source device currently providing wireless connection to a user equipment in a cellular mobile system;
a receiving unit for receiving trace data generated based on the control data; and
a processing unit for processing the trace data, wherein the processing unit is configured to determine from the trace data a target device to which the user equipment was handed over.

25. The administration device of claim 24, wherein the transmitting unit is configured to transmit at least one of a stop command for stopping the trace function and a request for trace data to the target device.

26. The administration device of claim 24 or 25, wherein the processing unit is configured to combine the trace data received by the receiving unit from the source device and target devices to which the user equipment was handed over.

27. The administration device of claim 24, wherein the transmitting unit is configured to transmit at least one of a stop command for stopping the trace function and a request for trace data to the source device.

28. A method comprising:
providing wireless connection to a user equipment in a cellular mobile system;
receiving control data for starting a trace function of the user equipment;
processing the trace function based on the control data; and
forwarding the control data to a target device in case of a handover of the user equipment to the target device.

29. The method of claim 28, wherein the trace function is terminated after the handover to the target device.

30. The method of claim 28 or 29, wherein the control data is included in a message used for performing the handover to the target device or in a separate message to the target device.

31. The method of any one of claims 28 to 30, further comprising transmitting trace data.

32. The method of claim 31, wherein the trace data are transmitted to an administration device administrating the trace function.

33. The method of claim 31 or 32, wherein the trace data are transmitted to the target device.

34. The method of any one of claims 31 to 33, wherein the trace data are transmitted to an anchor device from which the user equipment was handed over.

35. The method of any one of claims 28 to 34, wherein the control data are received from an administration device administrating the trace function.

36. The method of any one of claims 28 to 35, wherein the control data are received from a source device from which the user equipment has been handed over.

37. The method of any one of claims 28 to 36, further comprising:
receiving trace data; and
combining the received trace data with own trace data.

38. The method of claim 37, wherein the trace data are received from a source device from which the user equipment has been handed over.

39. The method of claim 37, wherein the trace data are received from a serving device to which the user equipment was handed over and which is currently serving the user equipment.

40. The method of any one of claims 28 to 39, further comprising:
receiving a stop command for stopping the trace function; and
terminating the trace function based on the stop command.

41. The method of claim 40, further comprising:
forwarding the stop command to a serving device to which the user equipment was handed over and which is currently serving the user equipment.

42. The method of claim 40 or 41, wherein the stop command is received from an administration device administrating the trace function.

43. The method of claim 40, wherein the stop command is received from an anchor device from which the user equipment was handed over.

44. The method of any one of claims 40 to 43, wherein, when the stop command is received, trace data are transmitted to a stop command sending device from which the stop command has been received.

45. The method of any one of claims 28 to 44, further comprising receiving a request for trace data.

46. The method of claim 45, wherein the request for trace data is received from an administration device administrating the trace function, the method further comprising forwarding the request to a serving device to which the user equipment was handed over and which is currently serving the user equipment.

47. The method of claim 45, wherein, when the request for trace data is received, the trace data are transmitted to a request sending device from which the request has been received.

48. The method of any one of claims 31, 44 or 47, wherein the trace data comprises trace result data generated in the processing step as a result of the processing of the trace function.

49. The method of claim 32, wherein the trace data are transmitted to the administration device such that the target device is indicated to the administration device.

50. The method of any one of claims 28 to 49, wherein, when the control data is received, an identification of a device currently serving the user equipment is transmitted to an administration unit administrating the trace function.

51. An administration method comprising:
administrating a trace function;
transmitting control data for starting the trace function to a source device currently providing wireless connection to a user equipment in a cellular mobile system;
receiving trace data generated based on the control data; and
processing the trace data, wherein from the trace data a target device is determined to which the user equipment was handed over.

52. The administration method of claim 51, wherein at least one of a stop command for stopping the trace function and a request for trace data is transmitted to the target device.

53. The administration method of claim 51 or 52, further comprising combining the trace data received from the source device and target devices to which the user equipment was handed over.

54. The administration method of claim 51, wherein at least one of a stop command for stopping the trace function and a request for trace data is transmitted to the source device.

55. A computer program product including a program for a processing device, comprising software code portions for performing the steps of any one of claims 1 to 50 when the program is run on the processing device.

56. A computer program product including a program for a processing device, comprising software code portions for performing the steps of any one of claims 51 to 54 when the program is run on the processing device.

57. The computer program product according to claim 55 or 56, wherein the computer program product comprises a computer-readable medium on which the software code portions are stored.

58. The computer program product according to claim 55 or 56, wherein the program is directly loadable into an internal memory of the processing device.
